# EUROPÄISCHE PATENTSCHRIFT

(11) **EP 2 756 590 B1**
(45) Veröffentlichungstag und Bekanntmachung des Hinweises auf die Patenterteilung: **10.08.2016**
(21) Anmeldenummer: 12788503.6
(22) Anmeldetag: 15.11.2012
(51) Int. Cl.: H02M 7/49, H02M 7/483

(54) **STROMRICHTERSCHALTUNG**
MODULAR MULTILEVEL DC/AC CONVERTER COMPRISING A SERIES CONNECTION OF DC/AC INVERTER SUB-MODULES CONTROLLED BY A CENTRAL AND ELECTRICALLY PROTECTIVE SEPARATED COMMON CONTROL UNIT
ONDULEUR MULTINIVEAU AVEC UNE PLURALITÉ DES SOUS-MODULES ONDULEUR AYANT UNE SÉPARATION DE PROTECTION ÉLECTRIQUE ENTRE LA COMMANDE CENTRALE ET CES SOUS-MODULES

(30) Priorität: 19.12.2011 EP 11194183
(43) Veröffentlichungstag der Anmeldung: 23.07.2014
(73) Patentinhaber: Siemens Aktiengesellschaft, 80333 München (DE)
(72) Erfinder: VÖLKEL, Stefan, 91058 Erlangen (DE)
(86) Internationale Anmeldenummer: PCT/EP2012/072725
(87) Internationale Veröffentlichungsnummer: WO 2013/092026

(56) Entgegenhaltungen:
- WO-A1-2010/127699
- LAMBERTZ LUKAS ET AL: "Modularer Hochfrequenz Umrichter fuer Fahrzeugantriebe", EMA 2010 ELEKTROMOBILAUSSTELLUNG - FACHTAGUNG - WETTBEWERBE / EMA 2010 ELEKTROMOBILAUSSTELLUNG (ETG-FB 126),, 1. August 2010 (2010-08-01), Seiten 47-53, XP009163159,
- KUI WANG ET AL: "Voltage balancing control and experiments of a novel modular multilevel converter", ENERGY CONVERSION CONGRESS AND EXPOSITION (ECCE), 2010 IEEE, IEEE, PISCATAWAY, NJ, USA, 12. September 2010 (2010-09-12), Seiten 3691-3696, XP031787543, ISBN: 978-1-4244-5286-6
- GLINKA M ET AL: "A New AC/AC Multilevel Converter Family", IEEE TRANSACTIONS ON INDUSTRIAL ELECTRONICS, IEEE SERVICE CENTER, PISCATAWAY, NJ, USA, Bd. 52, Nr. 3, 1. Juni 2005 (2005-06-01), Seiten 662-669, XP011133044, ISSN: 0278-0046, DOI: 10.1109/TIE.2005.843973
- STEPANOV A ET AL: "Development of versatile modular power converter for educational and research needs", POWER ELECTRONICS AND MOTION CONTROL CONFERENCE (EPE/PEMC), 2010 14TH INTERNATIONAL, IEEE, PISCATAWAY, NJ, USA, 6. September 2010 (2010-09-06), Seiten T14-24, XP031778539, ISBN: 978-1-4244-7856-9

## Beschreibung

Die Erfindung betrifft eine Stromrichterschaltung gemäß dem Oberbegriff des Anspruchs 1, ein Verfahren zum Entladen eines Zwischenkreiskondensators in einem Submodul der Stromrichterschaltung, eine Steuervorrichtung zur Durchführung des Verfahrens und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

In Kui Wang et al., "Voltage balancing control and experiments of a novel multilevel converter", Energy Conversion Congress and Exposition 2010, IEEE, wird eine modulare Stromrichterschaltung mit einer Anzahl von zueinander parallelen Reihenschaltungen von Submodulen angegeben. Jedes Submodul umfasst einen Zwischenkreiskondensator und eine dazu parallele Halbbrücke, wobei die Submodule jeweils an den Halbbrücken in Reihe geschaltet sind und an einem Submodul jeder Reihenschaltung ein Laststrom abgegriffen wird, und wobei jede Halbbrücke zur Pulsweitenmodulation (PWM) von einer zentralen Steuereinheit angesteuert wird.

In Glinka et al., "A New AC/AC Multilevel Converter Family", IEEE Transactions on Industrial Electronics, Bd. 52, Nr. 3, 662-669 (2005), nennt eine modulare Stromrichterschaltung, deren Submodule jeweils einen Zwischenkreiskondensator und eine dazu parallele Vollbrücke aufweisen, wobei die Submodule an je zwei Klemmen der Vollbrücken in Reihe geschaltet sind und hierbei insgesamt vier Stromzweige bilden. Ein Laststrom wird hierbei jeweils am Knotenpunkt von zwei Stromzweigen abgegriffen. Die einzelnen Vollbrückenschalter werden zur PWM von einer zentralen Steuereinheit angesteuert.

In der WO 2010/127699 A1 ist ein Verfahren angegeben, welches in einer modularen Stromrichterschaltung die Spannung eines Zwischenkreiskondensators in einem Submodul bestimmt, wobei die einzelnen Submodule jeweils parallel zum Zwischenkondensator eine Vollbrücke aufweisen. Die Submodule sind an je zwei Klemmen der Vollbrücken zu einzelnen Stromzweigen in Reihe, die Stromzweige zueinander in Stern- oder Dreieckkonfiguration geschaltet. Die einzelnen Vollbrückenschalter werden zur PWM von einer zentralen Steuereinheit angesteuert.

Es ist Aufgabe der Erfindung, eine verbesserte Stromrichterschaltung anzugeben.

Die Aufgabe wird durch die Merkmale der unabhängigen Ansprüche 1 und 8 gelöst. Bevorzugte Weiterbildungen sind Gegenstand der abhängigen Ansprüche.

Die Erfindung schlägt vor, die Vollbrücken und Halbbrücken in den Submodulen der Stromrichterschaltung der eingangs genannten Art mit einer gemeinsamen Steuervorrichtung anzusteuern.

Die Erfindung geht von der Überlegung aus, dass in der Stromrichterschaltung der eingangs genannten Art die Vollbrücke und die Halbbrücke in jedem Submodul durch eine in jedem Submodul eigens vorhandene Steuervorrichtung angesteuert werden könnte. Jede submodulinterne Steuervorrichtung könnte von einer weiteren, übergeordneten Steuervorrichtung, die beispielsweise zum übergeordneten Regeln einer elektrischen Leistungsabgabe an den eingangs genannten Elektromotor vorgesehen ist, Sollwerte zum Ansteuern der Vollbrücke und Halbbrücke im jeweiligen Submodul empfangen.

Hierzu ist eine Vielzahl an Aufteilungen eines einzigen Sollwerts notwendig ist, bevor die Schalter in den Vollbrücken und Halbbrücken im jeweiligen Submodul angesteuert werden können. So muss zunächst in der übergeordneten Steuervorrichtung der einzige Sollwert auf die einzelnen Submodule aufgeteilt werden. Diese aufgeteilten Sollwerte müssen über entsprechende Leitungen an die einzelnen submodulinternen Steuervorrichtungen übertragen werden. Die submodulinternen Steuervorrichtungen teilen den aufgeteilten Sollwert über weitere Leitungen in Form von Ansteuersignalen weiter auf die einzelnen Schalter der Vollbrücke und der Halbbrücke im Submodul auf.

Demgegenüber schlägt die Erfindung vor, den Schaltungsaufwand zum Übertragen des aufgeteilten Sollwertes auf die submodulinternen Steuervorrichtungen durch direktes Ansteuern der Vollbrücken und Halbbrücken der einzelnen Submodule zu vermeiden. Auf diese Weise ist der oben genannte Sollwert nur einmal auf die oben genannten Ansteuersignale aufzuteilen. Zwar könnte durch diesen Vorschlag zur Übertragung des Ansteuersignals zwischen jedem einzelnen Schalter der Vollbrücke und der Halbbrücke eine sichere elektrische Trennung zwischen der übergeordneten Steuervorrichtung und dem entsprechenden Schalter notwendig werden. Der Vorteil dieses Vorschlages ist jedoch, dass die übergeordnete Steuervorrichtung zu jeder Zeit ohne weiteren Schaltungsaufwand synchronisiert alle Schalter in den einzelnen Submodulen der Stromrichterschaltung mit den Ansteuersignalen ansteuern kann. Zudem ist in jedem Submodul nur ein geringer Elektronikaufwand notwendig. Schließlich sind auch notwendige Übertragungsschnittstellen zwischen der übergeordneten Steuervorrichtung und den submodulinternen Steuervorrichtungen obsolet.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf. Ferner ist parallel zur Halbbrücke und zur Gleichspannungsseite der Vollbrücke gleichspannungsseitig ein Zwischenkreiskondensator geschaltet. Erfindungsgemäß umfasst die Stromrichterschaltung eine Steuervorrichtung, die zum Ansteuern der Vollbrücke und der Halbbrücke sowohl des ersten als auch des zweiten Submoduls vorgesehen ist. Zusätzlich umfasst die angegebene Stromrichterschaltung jeweils eine Sensorverbindung zwischen sowohl dem ersten Submodul als auch dem zweiten Submodul und der Steuervorrichtung zum Erfassen der lastseitigen Spannungen an den Vollbrücken sowohl des ersten Submoduls als auch des zweiten Submoduls. Überdies oder alternativ dazu umfasst die angegebene Stromrichterschaltung jeweils eine Sensorverbindung zwischen sowohl dem ersten Submodul als auch dem zweiten Submodul und der Steuervorrichtung zum Erfassen der lastseitigen Ströme aus den Vollbrücken sowohl des ersten Submoduls als auch des zweiten Submoduls.

Durch die Erfassung der lastseitigen Spannungen und Ströme an den einzelnen Submodulen kann die Steuervorrichtung eine Rückmeldung über die elektrische Leistung erhalten, die an einen an die Stromrichterschaltung angeschlossenen elektrischen Verbraucher abgegeben wird.

Das heißt, dass die Stromrichterschaltung lediglich eine übergeordnete Steuervorrichtung aufweist, die auf direktem Weg die Schaltungselemente des ersten und des zweiten Submoduls ansteuert. Durch den Wegfall von Elektronik in den Submodulen ist die Stromrichterschaltung leichter, platzsparender und kostengünstiger. Zudem ist die Stromrichterschaltung zuverlässiger, da eine möglicherweise notwendige zusätzliche Schaltung zur Synchronisierung der Ansteuerung der einzelnen Vollbrücken und Halbbrücken in den Submodulen nicht mehr notwendig ist.

In einer Weiterbildung der Erfindung weisen die Halbbrücken und die Vollbrücken der Submodule Brückenzweige mit Schaltern auf. Diese Schalter sind durch die gemeinsame Steuervorrichtung ansteuerbar, wobei wenigstens diejenigen Schalter von der Steuervorrichtung sicher elektrisch getrennt sind, die keine direkte elektrische Verbindung zur elektrischen Leistungsquelle aufweisen. Da die angegebene Stromrichterschaltung aus einer Reihenschaltung von Submodulen aufgebaut ist, an die aus einer elektrischen Leistungsquelle eine Gleichspannung angelegt wird, liegt jedes der Submodule intern auf einem anderen elektrischen Potential. Werden diese Submodule über die Steuerleitungen und die Steuervorrichtung miteinander verbunden, könnten ohne die sichere elektrische Trennung Querströme zwischen den einzelnen Submodulen und der Steuervorrichtung entstehen, die beispielsweise die Steuervorrichtung zerstören könnten.

In einer bevorzugten Weiterbildung der Erfindung sind alle Schalter von der Steuervorrichtung sicher elektrisch getrennt. Auf diese Weise können die einzelnen Submodule in der angegebenen Stromrichterschaltung einheitlich aufgebaut werden, was gegebenenfalls eine kostengünstigere Herstellung der gesamten Stromrichterschaltung erlaubt.

In einer besonders bevorzugten Weiterbildung der Erfindung sind die von der Steuervorrichtung sicher elektrisch getrennten Schalter über einen optischen Übertragungsweg sicher elektrisch getrennt. Die optischen Übertragungswege können beispielsweise Lichtwellenleiter sein, die sich in besonders günstiger Weise platzsparend in der angegebenen Stromrichterschaltung implementieren lassen.

In einer anderen Weiterbildung der Erfindung umfasst die angegebene Stromrichterschaltung eine Sensorverbindung zwischen jedem Submodul und der Steuervorrichtung zum Erfassen der an den Zwischenkreiskondensatoren sowohl des ersten Submoduls als auch des zweiten Submoduls abfallenden Spannungen. Durch die an den Zwischenkreiskondensatoren abfallende Spannung lässt sich auf direkte Weise erkennen, ob ein Leistungsfluss zwischen einem Eingang und einem Ausgang eines Submoduls beispielsweise durch einen Fehler gestört ist. Ist die Spannung an den Zwischenkreiskondensatoren zu hoch, könnte dies an einer Unterbrechung in den Submodulen oder in an die Submodule angeschlossenen elektrischen Lasten liegen, so dass zu wenig in die Submodule eingespeiste Leistung an die elektrischen Lasten abgegeben wird. Daher muss ein großer Teil der entsprechenden Energie in den Zwischenkreiskondensatoren gespeichert werden, was zu der entsprechend hohen Spannung an den Zwischenkreiskondensatoren führt. Eine zu niedrige Spannung an den Zwischenkreiskondensatoren könnte ein Hinweis auf einen Kurzschluss sein.

In einer bevorzugten Weiterbildung der Erfindung sind die Sensorverbindungen zur Steuervorrichtung sicher elektrisch getrennt, so dass Querströme aus den Submodulen über die Steuervorrichtung vermieden werden.

In einer noch weiteren Weiterbildung der Erfindung umfasst die angegebene Stromrichterschaltung eine Sensorverbindung zur Leistungsquelle zum Erfassen einer Abgabespannung der Leistungsquelle und/oder eine Sensorverbindung zur Leistungsquelle zum Erfassen eines Abgabestromes der Leistungsquelle.

Die Erfindung gibt auch einen Elektromotor für ein Fahrzeug an, wobei der Elektromotor mehrere Motorwicklungen und eine angegebene Stromrichterschaltung mit einer der Anzahl der Motorwicklungen entsprechenden Anzahl an Submodulen umfasst. Dabei ist jedes Submodul ausgangsseitig an eine Motorwicklung angeschlossen.

Nachfolgend werden Ausführungsbeispiele der Erfindung anhand einer Zeichnung näher erläutert. Darin zeigen:
- FIG 1: eine schematische Darstellung einer Stromrichterschaltung mit mehreren Steuervorrichtungen,
- FIG 2: eine schematische Darstellung einer Stromrichterschaltung mit einer gemeinsamen Steuervorrichtung, und
- FIG 3: eine weitere Darstellung einer Stromrichterschaltung mit einer gemeinsamen Steuervorrichtung.

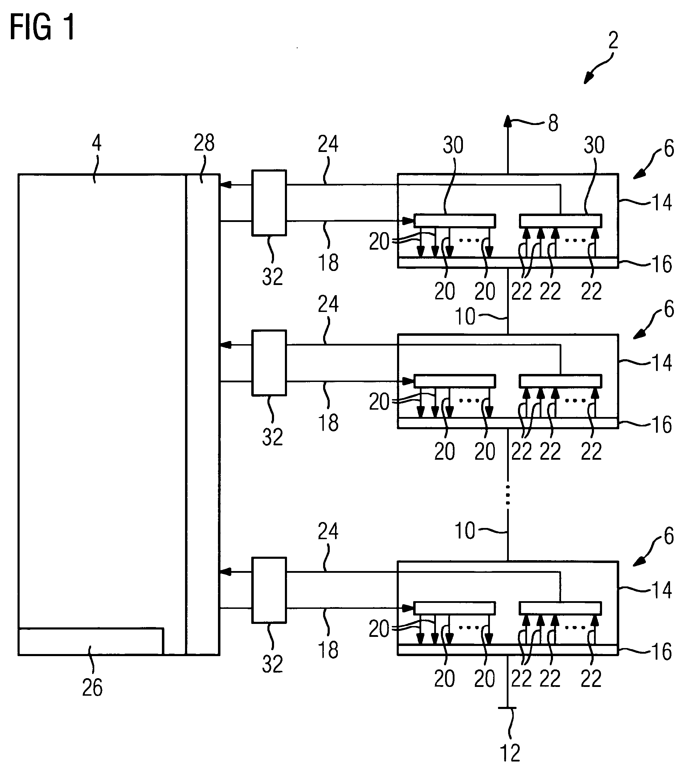

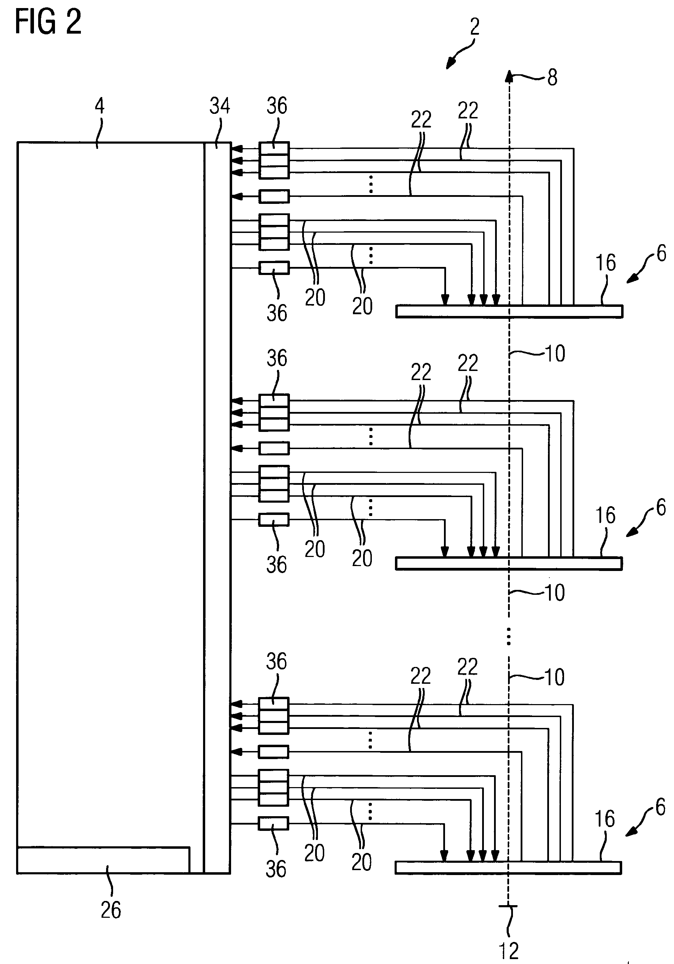

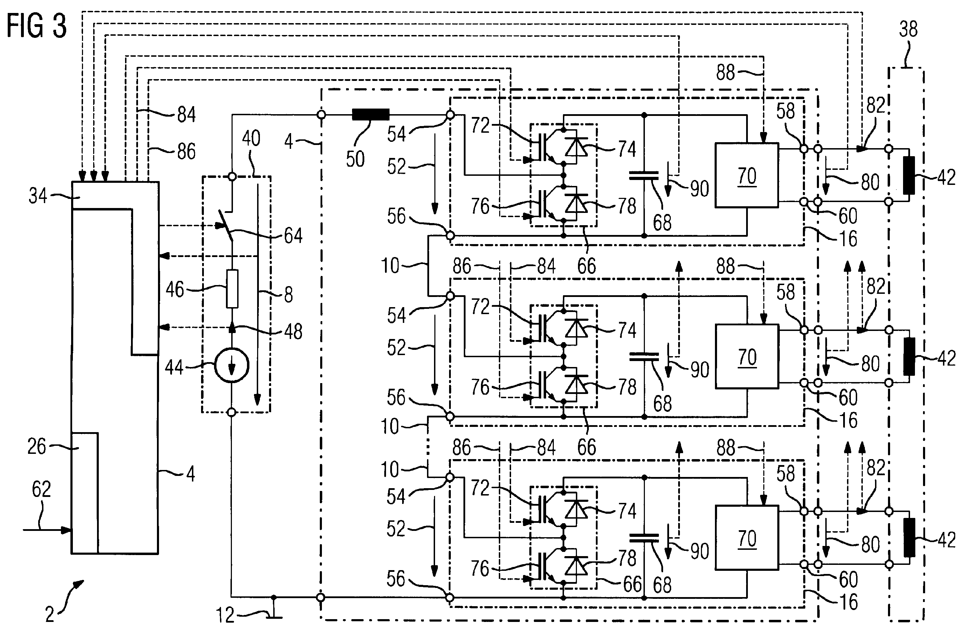

Nachstehend soll zunächst das Prinzip der Erfindung anhand der FIG 1 und 2 erläutert werden. Auf den detaillierten Aufbau eines Beispiels der angegebenen Stromrichterschaltung wird in FIG 3 eingegangen.

Es wird auf FIG 1 Bezug genommen, die eine Stromrichterschaltung 2 mit einer übergeordneten Steuervorrichtung 4 zeigt.

Die übergeordnete Steuervorrichtung 4 ist zum Ansteuern mehrere in Reihe geschalteter Submodule 6 vorgesehen. Die Reihenschaltung der Submodule 6 wird mit einer Gleichspannung 8 versorgt, so dass die einzelnen Submodule 6 jeweils auf verschiedenen Zwischenpotentialen 10 gegenüber einem Massepotential 12 liegen.

Jedes Submodul 6 besitzt eine eigene untergeordnete Steuervorrichtung 14, die zur Ansteuerung von nicht weiter gezeigten Schaltern und zur Überwachung nicht weiter gezeigter Ströme und Spannungen eines noch zu beschreibenden Submodulschaltkreises 16 vorgesehen ist. Zur Ansteuerung der Schalter sendet die übergeordnete Steuervorrichtung 4 über eine Hauptsteuerleitung 18 Steuerwerte, die in der untergeordneten Steuerung 14 über eine Vielzahl von submodulinternen Steuerleitungen 20 an die einzelnen Schalter verteilt werden. Entsprechend empfängt die untergeordnete Steuervorrichtung 14 über eine Vielzahl von submodulinternen Messleitungen 22 Messwerte zu den zu überwachenden Strömen und Spannungen, sammelt diese und sendet die erfassten Messwerte über eine Hauptmessleitung 24 an die übergeordnete Steuervorrichtung 4.

Die übergeordnete Steuervorrichtung 4 wertet die übermittelten Messwerte in einer zentralen Regelungselektronik 26 aus und generiert basierend darauf neue Steuerwerte, die dann über die Hauptsteuerleitung 18 wieder an die einzelnen Submodule 6 verteilt werden.

Die übergeordnete Steuervorrichtung 4 kann mit den Hauptsteuerleitungen 18 und den Hauptmessleitungen 24 über eine serielle Schnittstelle 28 verbunden sein, während die submodulintern die submodulinternen Steuerleitungen 20 und Messleitungen 22 über parallele Schnittstellen 30 angesteuert werden können.

Zur Vermeidung von Querströmen aus den Submodulen 6 zu der zentralen Steuervorrichtung 4 müssen die einzelnen Hauptsteuerleitungen 18 und Hauptmessleitungen 24 über eine sichere elektrische Trennung 32 potentialgetrennt sein. Gegebenenfalls sind submodulintern weitere sichere elektrische Trennungen auf den Steuer- und Messleitungen 20, 22 vorzusehen.

Es wird auf FIG 2 Bezug genommen, die eine weitere Stromrichterschaltung 2 mit der gemeinsamen Steuervorrichtung 4 zeigt. In FIG 2 werden zu FIG 1 gleiche Elemente mit gleichen Bezugszeichen versehen und nicht noch einmal beschrieben.

In der Stromrichterschaltung 2 der FIG 2 werden die einzelnen Submodulschaltkreise 16 direkt durch die übergeordnete Steuervorrichtung 4 angesteuert.

Dazu weist die übergeordnete Steuervorrichtung 4 statt der seriellen Schnittstelle 28 eine parallele Schnittstelle 34 auf, mit der die zu den Submodulen 6 führenden Steuer- und Messleitungen 20, 22 direkt verbunden sind. Zum Schutz der übergeordneten Steuervorrichtung 4 vor Querströmen aus den einzelnen Submodulschaltkreisen 16 weist jede Steuer- und Messleitung 20, 22 eine eigene sichere elektrische Trennung 36 auf. Diese sichere elektrische Trennung 36 kann beispielsweise durch die Ausbildung der Steuer- und Messleitung 20, 22 als Lichtwellenleiter technisch umgesetzt sein. In FIG 2 sind der Übersichtlichkeit halber nur einige der sicheren elektrischen Trennungen 36 mit einem Bezugszeichen versehen.

In der Stromrichterschaltung 2 der FIG 2 sind gegenüber der Stromrichterschaltung 2 der FIG 1 zwar (um einen ganzzahligen Faktor>3) mehr an sicheren elektrischen Trennungen 36 notwendig, der große Vorteil der Stromrichterschaltung 2 der FIG 2 liegt jedoch in der vollständig eingesparten untergeordneten Steuerung 14, der entsprechenden eingesparten seriellen Schnittstelle 28 und den eingesparten Hauptsteuerleitungen 18 sowie Hauptmessleitungen 24. Zudem kann die Stromrichterschaltung 2 der FIG 2 die einzelnen Submodulschaltkreise 16 synchronisiert ohne weitere technische Maßnahmen ansteuern, da in der Stromrichterschaltung 2 zu jedem Zeitpunkt alle Messwerte aus den einzelnen Submodulschaltkreisen 16 vorhanden sind.

Es wird auf FIG 3 Bezug genommen, die eine weitere Darstellung der Stromrichterschaltung 2 aus FIG 2 mit der gemeinsamen Steuervorrichtung 4 zeigt. In FIG 3 werden zu FIG 1 und 2 gleiche Elemente mit gleichen Bezugszeichen versehen und nicht noch einmal beschrieben.

Die Stromrichterschaltung 2 speist einen elektrischen Verbraucher 38 mit elektrischer Leistung aus einer elektrischen Leistungsquelle 40.

Der elektrische Verbraucher 38 ist in der vorliegenden Ausführung als Elektromotor eines Fahrzeuges ausgebildet und weist eine Anzahl an elektrischen Lasten 42 auf, wobei jede elektrische Last 42 eine Motorwicklung des Elektromotors darstellt.

Die elektrische Leistungsquelle 40 ist in der vorliegenden Ausführung eine Batterie 40, die sich in eine Spannungsquelle 44 mit einem dazu in Reihe angeschlossenen Innenwiderstand 46 zerlegen lässt. Die Batterie 40 legt an die Stromrichterschaltung 2 die Versorgungsgleichspannung 8 an und gibt an die Stromrichterschaltung 2 einen Batteriestrom 48 ab.

Die Stromrichterschaltung 2 weist eingangsseitig eine Induktivität 50 auf, die beispielsweise eine Drossel sein kann. Es ist jedoch auch möglich, dass diese Induktivität 50 allein durch die Verbindungsleitung zur Batterie 40 realisiert wird. An diese Induktivität 50 schließt sich in Reihe die Reihenschaltung der Submodulschaltkreise 16 an. An den einzelnen Submodulschaltkreisen 16 fällt jeweils eine Teilspannung 52 ab, die durch die Zwischenpotentiale 10 bestimmt werden. Ferner ist an jeden Submodulschaltkreis 16 jeweils eine elektrische Last 42 angeschlossen. Basierend auf den Teilspannungen 52 versorgen die Submodulschaltkreise 16 auf diese Weise die elektrischen Lasten 42 mit elektrischer Energie in einer noch zu beschreibenden Weise. Die Anzahl der Submodulschaltkreise 16 und elektrischen Lasten 42 kann beliebig hoch sein. Je mehr Submodulschaltkreise 16 jedoch in der Reihenschaltung verschaltet sind, desto kleiner werden die entsprechenden Teilspannungen 52.

Jeder Submodulschaltkreis 16 weist eine erste Eingangsklemme 54, eine zweite Eingangsklemme 56, eine erste Ausgangsklemme 58 und eine zweite Ausgangsklemme 60 auf. Während über den ersten und zweiten Eingangsklemmen 54, 56 jeweils die Teilspannungen 52 abfallen, sind an die ersten und zweiten Ausgangsklemmen 58, 60 die elektrischen Lasten 42 angeschlossen.

Die übergeordnete Steuervorrichtung 4 ist zur Erzeugung eines Drehfeldes mit den als Motorwicklungen ausgebildeten elektrischen Lasten 42 des als Elektromotor ausgebildeten elektrischen Verbrauchers 38 vorgesehen. In einem Fahrzeug kann die übergeordnete Steuervorrichtung 4 beispielsweise das Motormanagement des Fahrzeuges sein. Dazu kann die übergeordnete Steuervorrichtung 4 beispielsweise ein einzustellendes Solldrehmoment 62 von einem Fahrzeugpedal empfangen und das Solldrehmoment 62 dann mittels den Submodulschaltkreisen 16 als Stellglieder durch regelungstechnische Eingriffe in die elektrischen Lasten 42 am als Elektromotor ausgebildeten elektrischen Verbraucher 38 einstellen. Auf diese regelungstechnischen Eingriffe wird an späterer Stelle näher eingegangen.

Die übergeordnete Steuervorrichtung 4 ist ferner vorgesehen, die Versorgungsgleichspannung 8 sowie den Batteriestrom 48 zu erfassen. Anhand der Versorgungsgleichspannung 8 überprüft der die übergeordnete Steuervorrichtung 4 die Stromrichterschaltung 2 auf Fehler hin. Ist die Batteriespannung 16 beispielsweise zu gering, ist dies ein Anzeichen für einen Kurzschluss. Im Fehlerfall überführt die übergeordnete Steuervorrichtung 4 die Stromrichterschaltung 2 in einen sicheren Zustand, indem sie einen Schalter 64 öffnet, der beispielsweise intern in der Batterie 40 angeordnet sein kann.

Jeder Submodulschaltkreis 16 weist eine Eingangshalbbrücke 66, eine Vollbrücke 70 und einen Zwischenkreiskondensator 68 auf, die alle miteinander parallel verschaltet sind.

Die Eingangshalbbrücke 66 in jedem Submodulschaltkreis 16 weist in einem ersten Brückenarm einen ersten Schalter 72 und eine dazu parallel geschaltete erste Freilaufdiode 74 sowie in einem zweiten Brückenarm einen zum ersten Schalter 72 in Reihe geschalteten zweiten Schalter 76 und eine dazu antiparallel geschaltete zweite Freilaufdiode 78 auf. Die Schalter 72, 76 können als Leistungshalbleiterschalter, wie beispielsweise MOSFETs (Metalloxid-Feldeffekttransistor) ausgebildet sein. Abhängig von der Art des Leistungshalbleiterschalters 72, 76 können die Freilaufdioden 74, 78 auch weggelassen werden.

Die erste Teilspannung 52 ist an den zweiten Schalter 76 angelegt, während der erste Schalter 72 in Reihe zwischen dem zweiten Schalter 76 und der Vollbrücke 70 geschaltet ist. Somit kann der zweite Schalter 76 aus Sicht der Vollbrücke 70 den Eingang 54, 56 aus der Batterie 40 kurzschließen, während der erste Schalter 72 (bei geöffneten zweiten Schalter 76) die Vollbrücke 70 in den Strompfad der Batterie 40 legen kann. Werden in jedem Submodulschaltkreis 16 die Schalter 72, 76 in gleicher Weise abwechselnd geöffnet und geschlossen, ist gemeinsam mit der Induktivität 50 ein Hochsetzsteller geschaffen, der die Summe aller an den Submodulschaltkreisen 16 abfallenden Teilspannungen 52 höher setzt, als die Versorgungsgleichspannung 8. Weiterhin kann in jedem Submodulschaltkreis 16 durch die Eingangshalbbrücke 66 die Vollbrücke 70 auch dauerhaft aus der Reihenschaltung der Submodulschaltkreise 16 entfernt werden, wenn der zweite Schalter 76 dauerhaft geschlossen bleibt.

In jedem der Submodulschaltkreise 16 ist die Vollbrücke 70 zum Wechselrichten der am Eingang 54, 56 abfallenden Teilspannung 52 in eine Wechselspannung 80 am Ausgang 58, 60 vorgesehen. Dazu weist die Vollbrücke 70 in nicht gezeigter Weise zwei Halbbrücken auf, die wie die Eingangshalbbrücke 66 aufgebaut sind. Die Eingangshalbbrücke 66 und die beiden Halbbrücken der Vollbrücke 70 sind parallel miteinander verschaltet. An einem Brückenzweig der Vollbrücke 70 kann die Wechselspannung 80 abgegriffen werden. Durch die Wechselspannung 80 wird an die elektrische Last 42 ein Wechselstrom 82 abgegeben.

Zur Ansteuerung der Vollbrücke 70 in jedem Submodulschaltkreis 16 ist die übergeordnete Steuervorrichtung 4 vorgesehen. In FIG 3 ist die Ansteuerung der Submodulschaltkreise 16 durch die übergeordnete Steuervorrichtung 4 der Übersichtlichkeit halber nur für einen der Submodulschaltkreise 16 vollständig dargestellt. Die folgenden Aussagen betreffen jedoch alle Submodulschaltkreise 16 gemeinsam.

Zur Ansteuerung der Eingangshalbbrücke 66 und damit des Hochsetzstellers gibt die Steuervorrichtung 4 über die parallele Schnittstelle 34 ein erstes Schaltersignal 84 zum Öffnen und Schließen des ersten Schalters 72 und ein zweites Schaltersignal 86 zum Öffnen und Schließen des zweiten Schalters 76 ab. Die Schaltersignale 84, 86 werden vorzugsweise über einen Lichtwellenleiter zur sicheren elektrischen Trennung zwischen dem Submodulschaltkreis 16 und der übergeordneten Steuervorrichtung 4 übertragen. Die Ansteuerung einer Halbbrücke zur Realisierung einer Hochsetzstellerfunktion selbst ist dem Fachmann bekannt und soll deshalb der Kürze halber weggelassen werden.

In gleicher Weise wie bei der Eingangshalbbrücke 66 gibt die übergeordnete Steuerung 4 Schaltersignale 88 an die Vollbrücke 70 zur Realisierung der Wechselrichterfunktion ab. Auch die Realisierung eines Wechselrichters mit einer Vollbrücke ist dem Fachmann bekannt und soll deshalb der Kürze halber weggelassen werden. Je nachdem wie hoch das Solldrehmoment 62 ist und wie weit ein Ist-Drehmoment von diesem Solldrehmoment abweicht, stellt die übergeordnete Steuervorrichtung 4 mit der Vollbrücke 70 in jedem Submodulschaltkreis 16 die Wechselspannung 80 und den Wechselstrom 82 zur elektrischen Leistungsabgabe an den Elektromotor 38 ein und führt das Ist-Drehmoment damit an das Solldrehmoment 62 heran.

Die übergeordnete Steuerung 4 kann ferner in jedem Submodulschaltkreis 16 anhand einer am Zwischenkreiskondensator 68 abfallenden Spannung 90 einen Fehler im Submodulschaltkreis 16 erfassen. Der Zwischenkreiskondensator 68 ist zur Zwischenspeicherung von elektrischer Energie aus der elektrischen Last 42 aufgrund eines Blindleistungsflusses vorgesehen, die der Submodulschaltkreis 16 aufgrund der vorgegebenen Richtung des Batteriestromes 48 und der Versorgungsgleichspannung 8 nicht verlassen kann. Der Blindleistungsfluss ist jedoch begrenzt, so dass auch die Spannung 90 am Zwischenkreiskondensator 68 begrenzt ist. Überschreitet diese einen bestimmten Wert, so ist dies demnach ein Hinweis auf einen fehlerhaften elektrischen Energiefluss durch den Submodulschaltkreis 16, da der Zwischenkreiskondensator 68 nun nicht mehr ausschließlich elektrische Energie aus dem Blindleistungsfluss sondern auch aus einem Wirkleistungsfluss speichert, was darauf hindeutet, dass eventuell eine Unterbrechung im Submodulschaltkreis 16 vorliegen könnte. Unterschreitet die Spannung 90 am Zwischenkreiskondensator 68 hingegen einen weiteren kleineren vorbestimmten Wert, so ist dies ein Hinweis auf einen Kurzschluss zum Zwischenkreiskondensator 68. In beiden Fällen kann die übergeordnete Steuervorrichtung 4 mit einem zweiten Schaltersignal 86 den zweiten Schalter 76 dauerhaft schließen, so den Eingang 54, 56 des Submodulschaltkreises 16 kurzschließen und den Submodulschaltkreis 16 so aus dem Leistungskreis der Stromrichterschaltung 2 entfernen, ohne dass die restlichen Submodulschaltkreise 16 davon betroffen wären. Die Übertragung der Spannung 90 am Zwischenkreiskondensator 68 erfolgt bevorzugt wieder über einen Lichtwellenleiter.

In gleicher Weise wie die Spannung 90 des Zwischenkreiskondensators 68 können in jedem Submodulschaltkreis 16 die Werte der Wechselspannung 80 und des Wechselstromes 82 erfasst und über einen Lichtwellenleiter zur übergeordneten Steuervorrichtung 4 übertragen werden. Die übergeordnete Regelungsvorrichtung 26 in der übergeordneten Steuervorrichtung kann basierend auf diesen Werten das Ist-Drehmoment berechnen, das der als Elektromotor ausgebildete elektrische Verbraucher 38 erzeugt und basierend auf dem Ist-Drehmoment neue Steuersignale 84, 86, 88 für die Eingangshalbbrücken 66 und die Vollbrücken 70 generieren, so dass das Ist-Drehmoment dem Solldrehmoment 62 wie bereits beschrieben folgt.

## Patentansprüche

1. Stromrichterschaltung (2), umfassend wenigstens zwei Submodule (6,16) in Reihenschaltung, die über eine Induktivität elektrische Leistung aus einer eine Gleichspannung (8) abgebenden Leistungsquelle (40) bezieht,
- wobei jedes Submodul (6,16) eingangsseitig eine einphasige Halbbrücke (66) und lastseitig eine einphasige Vollbrücke (70) aufweist, und
- wobei parallel zur Halbbrücke (66) und zur Gleichspannungsseite der Vollbrücke (70) ein Zwischenkreiskondensator (68) geschaltet ist,
**gekennzeichnet durch**
- eine Steuervorrichtung (4), die zum direkten Ansteuern der Vollbrücke (70) und der Halbbrücke (66) sowohl des ersten als auch des zweiten Submoduls (6,16) vorgesehen ist, und
- jeweils eine Sensorverbindung zwischen sowohl dem ersten Submodul (6,16) als auch dem zweiten Submodul (6,16) und der Steuervorrichtung (4) zum Erfassen der lastseitigen Spannungen (80) an den Vollbrücken (70) sowohl des ersten Submoduls (6,16) als auch des zweiten Submoduls (6,16), und/oder
- jeweils eine Sensorverbindung zwischen sowohl dem ersten Submodul (6,16) als auch dem zweiten Submodul (6,16) und der Steuervorrichtung (4) zum Erfassen der lastseitigen Ströme (82) aus den Vollbrücken (70) sowohl des ersten Submoduls (6,16) als auch des zweiten Submoduls (6, 16).

2. Stromrichterschaltung (2) nach Anspruch 1, **dadurch gekennzeichnet, dass** die Halbbrücken (66) und die Vollbrücken (70) der Submodule (6,16) Brückenzweige mit Schaltern (72,76) aufweisen, die durch die Steuervorrichtung (4) ansteuerbar sind, wobei wenigstens diejenigen Schalter (72,76) von der Steuervorrichtung (4) sicher elektrisch getrennt sind, die keine direkte elektrische Verbindung zur elektrischen Leistungsquelle (40) aufweisen.

3. Stromrichterschaltung (2) nach Anspruch 2, **dadurch gekennzeichnet, dass** alle Schalter (72,76) von der Steuervorrichtung (4) sicher elektrisch getrennt sind.

4. Stromrichterschaltung (2) nach einem der Ansprüche 2 bis 3, wobei die von der Steuervorrichtung (4) sicher elektrisch getrennten Schalter (72,76) über einen optischen Übertragungsweg sicher elektrisch getrennt sind.

5. Stromrichterschaltung (2) nach einem der vorstehenden Ansprüche, **ekennzeichnet, durch** jeweils eine Sensorverbindung zwischen sowohl dem ersten Submodul (6,16) als auch dem zweiten Submodul (6,16) und der Steuervorrichtung (4) zum Erfassen der an den Zwischenkreiskondensatoren (68) sowohl des ersten Submoduls (6,16) als auch des zweiten Submoduls (6,16) abfallenden Spannungen (90).

6. Stromrichterschaltung (2) nach Anspruch 5, **dadurch ekennzeichnet**, dass die Sensorverbindungen zur Steuervorrichtung (4) sicher elektrisch getrennt sind.

7. Stromrichterschaltung (2) nach einem der vorstehenden Ansprüche, **gekennzeichnet durch** eine Sensorverbindung zur Leistungsquelle (40) zum Erfassen der Gleichspannung (8) der Leistungsquelle (40) und/oder eine Sensorverbindung zur Leistungsquelle (40) zum Erfassen eines Abgabestromes (48) der Leistungsquelle (40).

8. Elektromotor für ein Fahrzeug umfassend mehrere Motorwicklungen (42) und eine Stromrichterschaltung (2) nach einem der vorstehenden Ansprüche mit einer der Anzahl der Motorwicklungen (42) entsprechenden Anzahl an Submodulen (6,16), wobei jedes Submodul (6,16) ausgangsseitig an eine Motorwicklung (42) angeschlossen ist.

## Claims

1. Converter circuit (2), comprising at least two submodules (6, 16) in a series connection, which obtains electrical power from a power source (40) outputting a DC voltage (8) by way of an inductor,
- wherein each submodule (6, 16) has a single-phase half bridge (66) on the input side and a single-phase full bridge (70) on the load side, and
- wherein an intermediate circuit capacitor (68) is connected in parallel to the half bridge (66) and to the DC voltage side of the full bridge (70),
**characterised by**
- a control apparatus (4), which is provided to directly activate the full bridge (70) and the half bridge (66) both of the first and also of the second submodule (6, 16), and
- in each case a sensor connection between both the first submodule (6, 16) and also the second submodule (6, 16) and the control apparatus (4) for detecting the load side voltages (80) on the full bridges (70) both of the first submodule (6, 16) and also of the second submodule (6, 16), and/or
- in each case a sensor connection between both the first submodule (6, 16) and also the second submodule (6, 16) and the control apparatus (4) for detecting the load-side currents (82) from the full bridges (70) both of the first submodule (6, 16) and also of the second submodule (6, 16).

2. Converter circuit (2) according to claim 1, **characterised in that** the half bridges (66) and the full bridges (70) of the submodules (6, 16) have bridge sections with switches (72, 76), which can be activated by the control apparatus (4), wherein at least those switches (72, 76) which have no direct electrical connection to the electrical power source (40) are reliably electrically separated from the control apparatus (4).

3. Converter circuit (2) according to claim 2, **characterised in that** all switches (72, 76) are reliably electrically separated from the control apparatus (4).

4. Converter circuit (2) according to one of claims 2 to 3, wherein the switches (72, 76) which are reliably electrically separated from the control apparatus (4) are reliably electrically separated by way of an optical transmission path.

5. Converter circuit (2) according to one of the preceding claims, **characterised by**, in each case, a sensor connection between both the first submodule (6, 16) and also the second submodule (6, 16) and the control apparatus (4) for detecting the voltages (90) dropping on the intermediate circuit capacitors (68) both of the first submodule (6, 16) and also of the second submodule (6, 16).

6. Converter circuit (2) according to claim 5, **characterised in that** the sensor connections to the control apparatus (4) are reliably electrically separated.

7. Converter circuit (2) according to one of the preceding claims, **characterised by** a sensor connection to the power source (40) for detecting the DC voltage (8) of the power source (40) and/or a sensor connection to the power source (40) for detecting an output current (48) of the power source (40).

8. Electric motor for a vehicle comprising a number of motor windings (42) and a converter circuit (2) according to one of the preceding claims with a number of submodules (6, 16) corresponding to the number of motor windings (42), wherein each submodule (6, 16) is connected on the output side to a motor winding (42).

## Revendications

1. Circuit ( 2 ) convertisseur, comprenant au moins deux sous-modules ( 6, 16 ) montés en série, qui, par l'intermédiaire d'une inductance, se procurent de la puissance électrique provenant d'une source ( 40 ) de puissance cédant une tension ( 8 ) continue,
- dans lequel chaque sous-module ( 6, 16 ) a, du côté de l'entrée, un demi-pont ( 66 ) monophasé et, du côté de la charge, un pont ( 70 ) complet monophasé et
- dans lequel un condensateur ( 68 ) de circuit intermédiaire est monté en parallèle au demi-pont ( 66 ) et du côté de la tension continue du pont ( 70 ) complet,
**caractérisé en ce que**
- il est prévu un dispositif ( 4 ) de commande pour commander directement le pont ( 70 ) complet et le demi-pont ( 66 ) à la fois du premier et du deuxième sous-modules ( 6, 16 ) et
- il est prévu respectivement une liaison de capteur entre tant le premier sous-module ( 6, 16 ) que le deuxième sous-module ( 6, 16 ) et le dispositif de commande pour détecter les tensions ( 80 ) du côté de la charge aux bornes des ponts ( 70 ) complets, tant du premier sous-module ( 6, 16 ) que du deuxième module ( 6, 16 ) et/ou
- il est prévu respectivement une liaison de capteur entre tant le premier sous-module ( 6, 16 ) que le deuxième sous-module ( 6, 16 ) et le dispositif ( 4 ) de commande pour détecter les courants ( 82 ) du côté de la charge provenant des ponts ( 70 ) complets, tant du premier sous-module ( 6, 16 ) que du deuxième sous-module ( 6, 16 ).

2. Circuit ( 2 ) convertisseur suivant la revendication 1, **caractérisé en ce que** les demi-ponts ( 66 ) et les ponts ( 70 ) complets des sous-modules ( 6, 16 ) ont des branches de pont ayant des commutateurs ( 72, 76 ), qui peuvent être commandés par le dispositif ( 4 ) de commande, au moins les commutateurs ( 72, 76 ), qui n'ont pas de liaison électrique directe avec la source ( 40 ) de puissance électrique, sont séparés électriquement d'une manière sécurisée du dispositif ( 4 ) de commande.

3. Circuit ( 2 ) convertisseur suivant la revendication 2, **caractérisé en ce que** tous les commutateurs ( 72, 76 ) sont séparés électriquement d'une manière sécurisée du dispositif ( 4 ) de commande.

4. Circuit ( 2 ) convertisseur suivant l'une des revendications 2 à 3, dans lequel les commutateurs ( 72, 76 ) séparés électriquement d'une manière sécurisée du dispositif ( 4 ) de commande sont séparés électriquement d'une manière sécurisée par une voie de transmission optique.

5. Circuit ( 2 ) convertisseur suivant l'une des revendications précédentes, **caractérisé par** respectivement une liaison de capteur entre tant le premier sous-module ( 6, 16 ) que le deuxième sous-module ( 6, 16 ) et le dispositif ( 4 ) de commande pour détecter les tensions ( 90 ) chutant aux bornes des condensateurs ( 68 ) intermédiaires tant du premier sous-module ( 6, 16 ) que du deuxième sous-module ( 6, 16 ).

6. Circuit ( 2 ) convertisseur suivant la revendication 5, **caractérisé en ce que** les liaisons de capteurs sont séparées électriquement d'une manière sécurisée du dispositif ( 4 ) de commande.

7. Circuit ( 2 ) convertisseur suivant l'une des revendications précédentes, **caractérisé par** une liaison de capteur allant à la source ( 40 ) de puissance pour détecter la tension ( 8 ) continue de la source ( 40 ) de puissance et/ou par une liaison de capteur allant à la source ( 40 ) de puissance pour détecter un courant ( 48 ) débité de la source ( 40 ) de puissance.

8. Moteur électrique pour un véhicule, comprenant plusieurs enroulements ( 42 ) de moteur et un circuit ( 2 ) convertisseur suivant l'une des revendications précédentes, ayant un nombre de sous-modules ( 6, 16 ) correspondant au nombre des enroulements ( 42 ) de moteur, chaque sous-module ( 6, 16 ) étant relié du côté de la sortie à un enroulement ( 42 ) de moteur.
